# FASCICULE DE BREVET EUROPEEN

(11) **EP 2 048 324 B1**
(45) Date de publication et mention de la délivrance du brevet: **08.12.2010**
(21) Numéro de dépôt: 08165923.7
(22) Date de dépôt: 06.10.2008
(51) Int. Cl.: F01D 5/08, F01D 5/26, F01D 11/00, F02C 7/00

(54) **Stator de turbine pour turbomachine d'aeronef integrant un dispositif d'amortissement de vibrations**
Turbinenstator für Turbotriebwerk eines Luftfahrzeugs, der mit einer Schwingungsdämpfungsvorrichtung ausgestattet ist
Turbine stator for aircraft turbomachine including a vibration damper device

(30) Priorité: 11.10.2007 FR 0758225
(43) Date de publication de la demande: 15.04.2009
(73) Titulaire: Snecma, 75015 Paris (FR)
(72) Inventeur: Dakowski, Mathieu, 94370 Sucy en Brie (FR); Gandelot, Sandrine, 92120 Montrouge (FR); Lefebvre, Eric, Jacques, 89340 Champigny (FR)
(74) Mandataire: Ilgart, Jean-Christophe

(56) Documents cités:
- EP-A- 0 785 338
- EP-A- 1 211 381
- EP-A- 1 441 108
- EP-A- 1 785 651

## Description

### DOMAINE TECHNIQUE

La présente invention se rapporte de façon générale à un stator de turbine pour turbomachine d'aéronef, et à une turbine de turbomachine comportant un tel stator, de préférence une turbine haute pression.

L'invention concerne également une turbomachine pour aéronef équipée d'au moins une telle turbine, la turbomachine prenant de préférence la forme d'un turboréacteur ou d'un turbopropulseur.

### ETAT DE LA TECHNIQUE ANTERIEURE

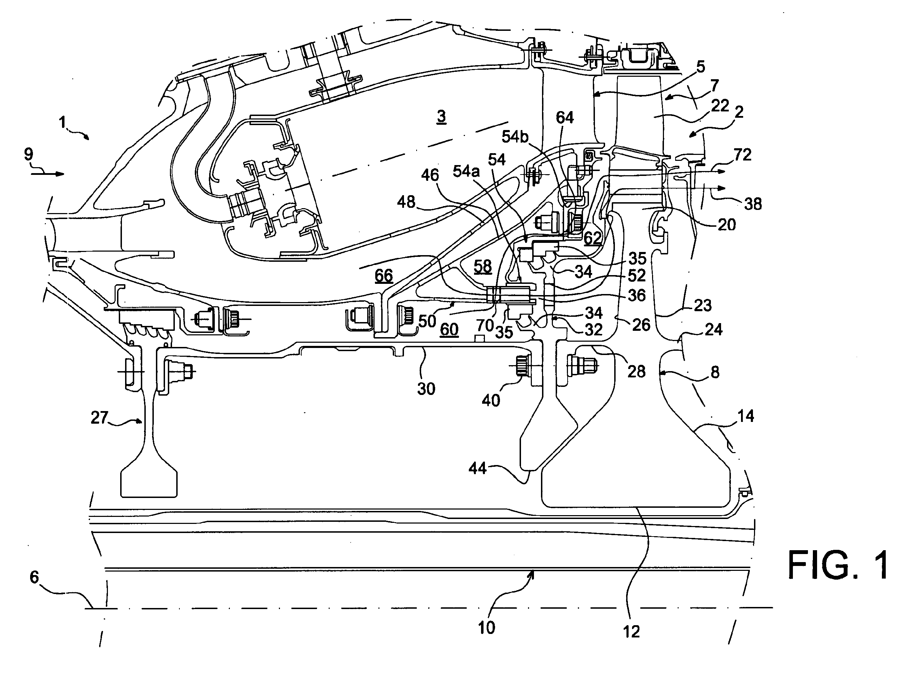

Sur la figure 1, il est représenté une vue partielle d'une turbomachine 1 d'aéronef, comprenant une turbine 2 selon une réalisation classique de l'art antérieur. Sur cette figure, la turbine 2 correspond à une turbine haute pression de la turbomachine, dite turbine HP, la turbomachine prenant ici la forme d'un turboréacteur pour aéronef.

La turbine 2, située en aval d'une chambre de combustion 3 du turboréacteur, comprend un stator 5 et un rotor 7, ce dernier étant globalement situé en aval du stator 5. A cet égard, il est noté que les termes « aval » et « amont » employés ci-après sont à considérer par rapport à une direction principale d'écoulement des gaz à travers la turbomachine, référencée schématiquement par la flèche 9, cette direction étant sensiblement parallèle à un axe longitudinal 6 du turboréacteur, correspondant simultanément à un axe du stator 5 et du rotor 8 de la turbine.

En effet, le rotor 7 comporte un disque principal de rotor dénommé disque de support d'aubes 8, d'axe 6, traversant un système d'axes 10 du turboréacteur, grâce à la présence d'un alésage 12 réalisé de façon connue au niveau d'une portion radiale interne élargie 14 constituant la portion la plus épaisse du disque 8.

Au niveau d'une portion d'extrémité radiale externe 20 du disque 8, se trouvent montées des aubes de turbine 22 à travers lesquelles les gaz s'échappant de la chambre de combustion 2 peuvent se détendre.

Sur le flanc aval 23 du disque de support d'aubes 8 est agencée une bride annulaire de liaison 24 servant à la fixation de ce disque 8 sur une partie aval de la turbine, non représentée. D'autre part, sur le flanc amont 26 du disque de support d'aubes 8 est agencée une autre bride annulaire de liaison 28 servant à la fixation de ce disque 8 sur un autre module de turbomachine, et plus spécifiquement sur le compresseur haute pression, dit compresseur HP 27, comprenant quant à lui une bride annulaire de liaison aval 30. Ici encore, la bride annulaire de liaison amont 28 fait saillie à partir du flanc amont 26 avec lequel elle est réalisée d'un seul tenant, au niveau d'une partie située au-dessus de la portion radiale interne élargie 14.

Outre la fonction d'assemblage avec le compresseur HP, cette bride annulaire de liaison amont 28 sert également au montage d'un disque labyrinthe 32 situé en amont du disque de support d'aubes 8, dont l'une des fonctions connue de l'homme du métier réside dans l'aide au refroidissement de ce disque 8 et des aubes qu'il porte. Pour ce faire, le disque 32 comporte un ou plusieurs labyrinthes annulaires d'étanchéité 34, formant dispositifs d'étanchéité en tangentant des éléments annulaires abradables 35 prévus sur le stator 5, également dits éléments de friction. Cela permet de définir un espace annulaire sous pression 36 vers l'amont, à l'aide du disque 32. Ainsi, l'air frais pénétrant au sein de cet espace 36 vient traverser le disque 32 avant d'épouser le flanc amont 26 du disque 8, puis rejoint radialement vers l'extérieur un circuit d'air principal à travers les aubes 22, comme montré schématiquement par la flèche 38 de la figure 1.

Dans la réalisation représentée, le disque labyrinthe 32 est agencé entre les deux brides annulaires de liaison 28, 30, sur lesquelles il est monté fixement à l'aide de boulons 40 servant à l'assemblage des deux brides, et répartis tout autour de l'axe 6. Le disque labyrinthe 32 traverse également le système d'axes 10 du turboréacteur, grâce à la présence d'un alésage 44.

Pour ce qui concerne le stator 5 situé plus en amont, celui-ci comprend tout d'abord une paroi de stator annulaire 46, située à proximité et en aval d'un fond de chambre de combustion 48. La paroi 46 porte fixement vers l'aval, de préférence à proximité de son extrémité interne, un injecteur d'air haute pression 50 de sortie annulaire orientée en regard d'orifices traversants 52 pratiqués sur le disque labyrinthe 32 agencé en aval.

De plus, le stator 5 comporte un support annulaire 54 portant fixement au moins l'un des éléments abradables 35. Dans la configuration présentée, il porte l'élément abradable 35 formant le dispositif d'étanchéité le plus externe radialement, conjointement avec son labyrinthe associé 34. A cet égard, il est indiqué que le second dispositif d'étanchéité, le plus interne, est formé à l'aide d'un élément abradable 35 monté fixement sur l'injecteur 50, en étant orienté radialement vers l'intérieur de façon à tangenter son labyrinthe interne associé 34 du disque 32.

Le support 54, agencé en aval de la paroi de stator 46 réalisée de préférence d'une seule pièce avec l'injecteur 50, est raccordé fixement à son extrémité radiale inférieure 54a à l'injecteur d'air haute pression 50, de préférence sur une sortie de ce dernier, par exemple par soudage ou rivetage, ou tout autre moyen approprié. De plus, il est raccordé fixement à son extrémité radiale supérieure 54b à la paroi de stator 46, par exemple par boulonnage ou tout autre moyen approprié. Ainsi, le support annulaire 54, la paroi de stator 46 et l'injecteur d'air haute pression 50 délimitent conjointement une cavité sous pression 58 susceptible d'être traversée par de l'air sous pression, comme cela sera détaillé ci-après.

Par ailleurs, le dispositif d'étanchéité interne 34, 35 délimite en partie une frontière entre l'espace annulaire 36 et une cavité amont 60 lui étant adjacente, alors que le dispositif d'étanchéité externe 34, 35 situé entre les extrémités 54a, 54b du support 54 délimite en partie une frontière entre l'espace 36 et ladite cavité sous pression 58 lui étant également adjacente. Ces cavités 58, 60 sont séparées radialement l'une de l'autre par l'injecteur 50.

Il est noté que le stator présente, en aval de la cavité 58 dans la direction de l'écoulement d'une veine principale, une autre cavité annulaire 62 séparée de la cavité 58 par le support 54, des trous traversants 64 étant pratiqués dans ce dernier de manière à permettre la communication d'air entre les cavités 58, 62. Comme visible sur la figure 1, la cavité 62 se situe en aval de la cavité 58, et communique avec le passage d'air situé entre le disque de turbine 8 et ses aubes 22.

L'injecteur 50 est réalisé de manière à puiser de l'air frais depuis une cavité stator 66 délimitée vers l'aval par le fond de chambre de combustion 48. Comme cela est montré par la flèche 38, l'air situé dans la cavité stator 66 traverse le fond 48 disposant d'orifices de passages appropriés, puis traverse d'autres orifices de passages d'une partie radialement interne de la paroi de stator 46, avant de pénétrer dans l'injecteur 50. Ensuite, l'air frais éjecté de l'injecteur pénètre au sein de l'espace 36, puis traverse les orifices 52 avant de venir épouser le flanc amont 26 du disque 8, pour ensuite rejoindre radialement vers l'extérieur le circuit d'air principal à travers les aubes 22.

A titre indicatif, l'injecteur 50 prend une forme quelconque connue de l'homme du métier, telle que celle dite de « pales » permettant de rendre le flux d'air provenant de la cavité stator 66 tangent au rotor 7. Dans un tel cas, l'injecteur 50 est alors assimilable à un distributeur axial classique, mettant ainsi l'air dans de meilleures conditions que s'il était amené à traverser des perçages inclinés, solution qui peut néanmoins être retenue. La conséquence directe de l'utilisation d'une telle disposition est la suppression d'un effet d'éclatement dû au jet sur le disque labyrinthe 32, source importante d'échauffement de l'air d'alimentation des aubes.

Le stator 5 peut comprendre des moyens d'évacuation d'air de fuite provenant du dispositif d'étanchéité interne 34, 35, afin d'évacuer l'air de la cavité 60 adjacente à l'espace 36, vers la cavité 58 de pression inférieure. Ces moyens d'évacuation d'air peuvent prendre la forme de trous 70 pratiqués dans l'injecteur 50, par exemple dans la direction radiale. Ainsi, l'air de fuite pénétrant dans la cavité 60 est dirigé vers la cavité 58 en passant par les trous 70, puis emprunte ensuite les trous 64 afin de rejoindre la cavité 62 et la veine principale, comme cela est schématisé par la flèche 72.

En fonctionnement, les diverses sollicitations peuvent amener à une réponse vibratoire auto-entretenue d'interaction dynamique entre le rotor 7 et le stator 5, ce qui peut être destructif pour l'un et/ou l'autre de ces deux éléments. A cet égard, il est noté que la détermination du risque d'interaction est généralement effectuée par calcul. En fonction des risques calculés, le principe habituel est de raidir ou d'assouplir les éléments constitutifs du rotor et/ou du stator. Cependant, ces opérations peuvent ne pas être suffisantes pour éliminer totalement les risques d'interaction, de sorte qu'il peut s'avérer nécessaire de faire appel à d'autres techniques. En outre divulge EP 1 211 381 le préambule de la revendication 1.

### EXPOSÉ DE L'INVENTION

L'invention a donc pour but de remédier à l'inconvénient mentionné ci-dessus, relatif aux réalisations de l'art antérieur.

Pour ce faire, l'invention a tout d'abord pour objet un stator de turbine pour turbomachine d'aéronef, comprenant :
- une paroi de stator portant fixement vers l'aval un injecteur d'air haute pression ; et
- un support annulaire d'élément abradable destiné à être contacté par un labyrinthe d'étanchéité, ledit support agencé en aval de ladite paroi de stator étant raccordé fixement à son extrémité radiale inférieure audit injecteur d'air haute pression et à son extrémité radiale supérieure à ladite paroi de stator, de manière à ce que ledit support annulaire, ladite paroi de stator et ledit injecteur d'air haute pression délimitent conjointement une cavité sous pression.
   Selon l'invention, le stator comporte de plus au moins un dispositif d'amortissement de vibrations placé dans ladite cavité sous pression, ledit dispositif d'amortissement de vibrations étant en contact avec chacun des deux éléments pris parmi ladite paroi de stator et ledit support annulaire d'élément abradable.
   Ainsi, le dispositif d'amortissement permet de limiter les vibrations subies par le stator de turbine en fonctionnement, grâce à son rattachement d'une part à la paroi de stator, et d'autre part au support annulaire situé en aval. Ce positionnement spécifique a été retenu suite à la constatation que les diverses sollicitations rencontrées en fonctionnement engendraient à une forte réponse vibratoire au niveau de la paroi de stator et du support annulaire d'élément abradable. De plus, le fait de réduire les vibrations sur ces deux pièces particulières assure parallèlement une baisse de la réponse vibratoire de l'ensemble du stator, ainsi que celle du rotor de turbine associé. Par conséquent, l'invention permet avantageusement de limiter à un niveau raisonnable l'interaction dynamique vibratoire entre le rotor et le stator, par une solution simple. A cet égard, le dispositif d'amortissement peut prendre toute forme appropriée, telle que celle d'une ou plusieurs tôles, ou encore de moyens élastiques tels que des ressorts, etc.
   De préférence, comme cela vient d'être évoqué, le dispositif d'amortissement de vibrations prend la forme d'une tôle placée dans ladite cavité sous pression et présentant une première extrémité montée fixement sur l'un des deux éléments pris parmi ladite paroi de stator et ledit support annulaire d'élément abradable, ainsi qu'une seconde extrémité libre, maintenue en appui contre l'autre desdits deux éléments.
   Cette configuration particulière permet globalement de rigidifier l'ensemble comprenant les deux éléments de stator reliés par une telle tôle, et de manière plus générale, de rigidifier et de limiter les vibrations de l'ensemble du stator. De plus, la seconde extrémité libre étant uniquement en appui contre son élément de stator associé, elle est de ce fait mobile et donc susceptible de frotter sur celui-ci, ce qui permet un amortissement par frottement des vibrations entre les deux pièces.
   La ou les tôles d'amortissement peuvent prendre toute forme appropriée. Il peut par exemple s'agir de plusieurs tôles en forme de lames réparties autour de l'axe de la turbine, chaque lame s'étendant sensiblement selon la direction axiale entre ses deux extrémités de lame, dont l'une reste uniquement maintenue en appui sur son élément de contact afin de bénéficier de l'amortissement des vibrations par frottement. Les lames peuvent dans ce cas être courbes, notamment au niveau de la seconde extrémité libre simplement en appui, afin de faciliter son contact par frottement avec son élément de stator associé.
   Cependant, un mode de réalisation préféré consiste à prévoir une tôle annulaire d'amortissement de vibrations, centrée sur un axe longitudinal du stator et placée dans ladite cavité sous pression, lesdites première et seconde extrémités correspondant à des extrémités annulaires de ladite tôle.
   De préférence, ladite tôle est percée de manière à permettre une circulation d'air à travers celle-ci, et donc à assurer un passage pour l'air entre les deux compartiments de la cavité sous pression, délimités par cette même tôle.
   Une solution alternative pour le passage de l'air frais de l'un à l'autre des deux compartiments, qui peut éventuellement être combinée à la solution précédente, réside dans le fait de conformer ladite seconde extrémité maintenue en appui contre ledit autre des deux éléments de manière à présenter en alternance, selon une direction circonférentielle, des lobes en appui contre ledit autre des deux éléments, et des creux, ces derniers permettant ainsi le passage de l'air.
   De préférence, en demi-section transversale, ladite tôle est de forme courbe, par exemple de forme générale en U ou en C.
   Pour une efficacité maximale de l'amortissement des vibrations par frottement, le stator peut être conçu de sorte qu'en demi-section transversale, un effort de contact entre la seconde extrémité et ledit autre des deux éléments est localement sensiblement orthogonal à une surface de ladite tôle.
   L'invention a également pour objet une turbine pour turbomachine d'aéronef comprenant un stator tel que décrit ci-dessus, la turbine étant de préférence une turbine haute pression.
   Enfin, l'invention se rapporte également à une turbomachine d'aéronef comprenant une telle turbine.
   D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue partielle en coupe longitudinale d'une turbomachine d'aéronef, comprenant un stator de turbine selon une réalisation classique de l'art antérieur ;
- la figure 2 représente une vue partielle en coupe longitudinale d'une turbomachine d'aéronef, comprenant un stator de turbine selon un premier mode de réalisation préféré de la présente invention ;
- la figure 3a représente une vue agrandie similaire à celle montrée sur la figure 2, avec le stator de turbine se présentant sous la forme d'un second mode de réalisation préféré de la présente invention ;
- la figure 3b représente une vue partielle en perspective de la tôle annulaire d'amortissement de vibrations équipant le stator de turbine montré sur la figure 3a ;
- la figure 4a représente une vue similaire à celle montrée sur la figure 3a, avec le stator de turbine se présentant sous la forme d'un troisième mode de réalisation préféré de la présente invention ;
- la figure 4b représente une vue partielle en perspective de la tôle annulaire d'amortissement de vibrations équipant le stator de turbine montré sur la figure 4a ;
- la figure 5a représente une vue similaire à celle montrée sur la figure 3a, avec le stator de turbine se présentant sous la forme d'un quatrième mode de réalisation préféré de la présente invention ; et
- la figure 5b représente une vue en coupe selon la ligne Vb-Vb de la figure 5a.

### EXPOSÉ DÉTAILLÉ DE MODES DE RÉALISATION PRÉFÉRÉS

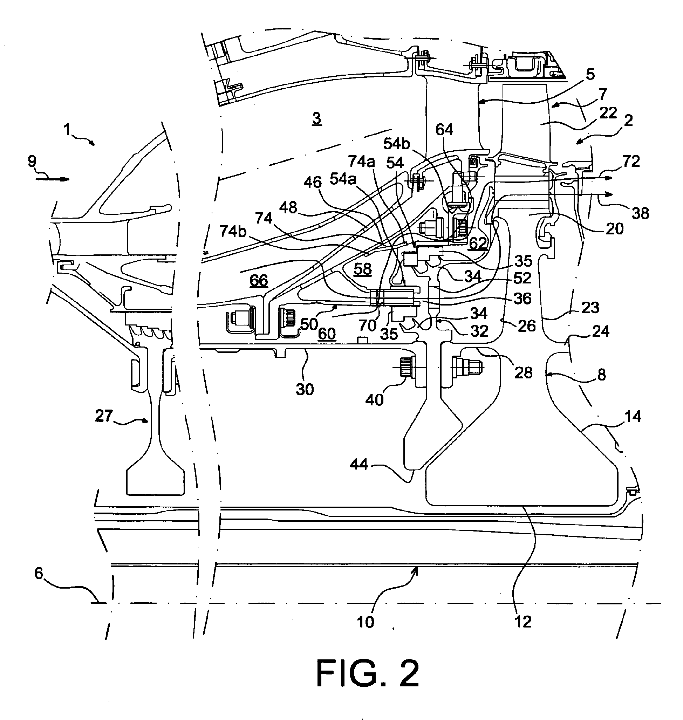

Tout d'abord en référence à la figure 2, on peut voir un stator de turbine selon un premier mode de réalisation préféré de la présente invention. Ce premier mode de réalisation préféré, ainsi que les modes de réalisation préférés suivants, reprennent de préférence l'ensemble des éléments décrits pour la turbomachine conforme à l'art antérieur représentée sur la figure 1, la particularité de l'invention résidant en effet dans l'adjonction d'un ou plusieurs dispositifs d'amortissement de vibrations placés dans la cavité sous pression 58, chaque dispositif d'amortissement de vibrations étant en contact avec la paroi de stator 46 et le support annulaire d'élément abradable 54.

Ainsi, sur les figures, les éléments portant les mêmes références numériques correspondent à des éléments identiques ou similaires.

Dans le premier mode de réalisation préféré représenté sur la figure 2, le dispositif d'amortissement de vibrations prend la forme d'une tôle annulaire 74 placée dans la cavité sous pression 58 et centrée sur l'axe 6, cette tôle présentant une première extrémité 74a montée fixement sur le support d'élément abradable 54, ainsi qu'une seconde extrémité libre 74b, simplement maintenue en appui contre la paroi de stator 46. Naturellement, une solution inversée peut être envisagée, sans sortir du cadre de l'invention.

La première extrémité 74a, située la plus en aval, est une extrémité annulaire montée fixement par rivetage, soudage, ou tout autre moyen approprié sur le support 54. En ce qui concerne la seconde extrémité libre 74b, celle-ci est maintenue en appui contre la paroi 46, tout en restant mobile par rapport à cette dernière, de sorte qu'elle est susceptible de procurer un amortissement par frottement des vibrations entre les éléments 46 et 54. Elle permet également de rigidifier le stator dans son ensemble.

Dans ce premier mode de réalisation préféré, en demi-section transversale telle que représentée sur la figure 2, la tôle 74 prend globalement la forme de trois segments de droite adjacents dans la direction 9, le premier et le dernier correspondant respectivement aux deux extrémités 74a, 74b, et le segment intermédiaire faisant la liaison entre les deux autres. Dans cette demi-section transversale, les deux segments de droite correspondant aux extrémités sont de préférence en contact linéaire avec leurs éléments de stator associés 46, 54, le segment intermédiaire étant quant à lui sensiblement orienté selon la direction 9.

Même si cela n'a pas été représenté, la tôle 74 est de préférence percée de manière à permettre une circulation d'air à travers celle-ci, et donc à assurer un passage pour l'air entre les deux compartiments de la cavité sous pression 58 (non référencés), délimités par cette même tôle. Ainsi, l'air de fuite pénétrant dans la cavité 60 est dirigé vers la cavité 58 en passant par les trous 70, puis emprunte les orifices de la tôle 74 afin de la traverser, pour ensuite emprunter les trous 64 afin de rejoindre la cavité 62 et la veine principale, comme cela est schématisé par la flèche 72.

Néanmoins, comme cela ressort des modes de réalisation suivants qui vont à présent être décrits, la forme de la tôle annulaire d'amortissement de vibrations peut être différente.

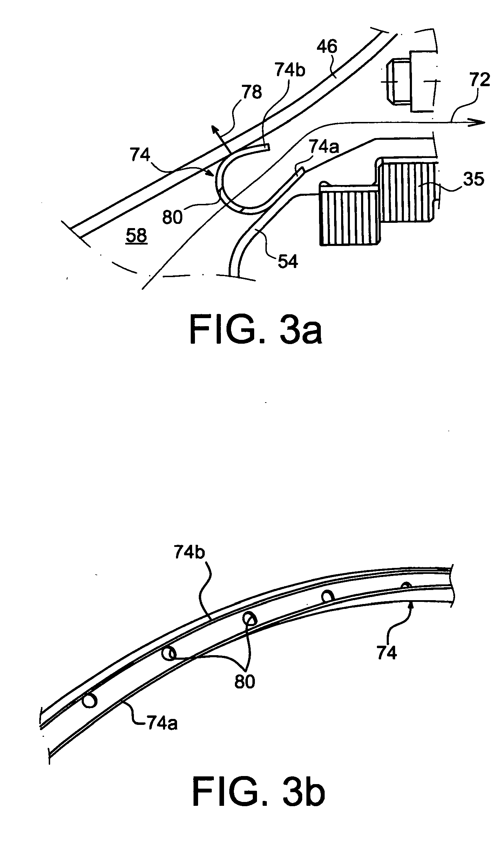

Sur les figures 3a et 3b représentant un second mode de réalisation préféré, la tôle 74 prend en demi-section transversale une forme courbe, et de préférence une forme générale en U ou en C. La seconde extrémité libre 74b du C ou du U est recourbée de manière à ce qu'en demi-section transversale, un effort de contact 78 entre cette seconde extrémité 74b et la paroi 46 soit localement, à savoir au point de contact, sensiblement orthogonal à la surface de la tôle.

La tôle 74 est représentée avec ses orifices traversants 80, permettant à l'air de transiter du compartiment radialement inférieur au compartiment radialement supérieur de la cavité 58, délimités l'un de l'autre par cette même tôle 74. Comme montré sur la figure 3b, les orifices 80 peuvent être de section circulaire.

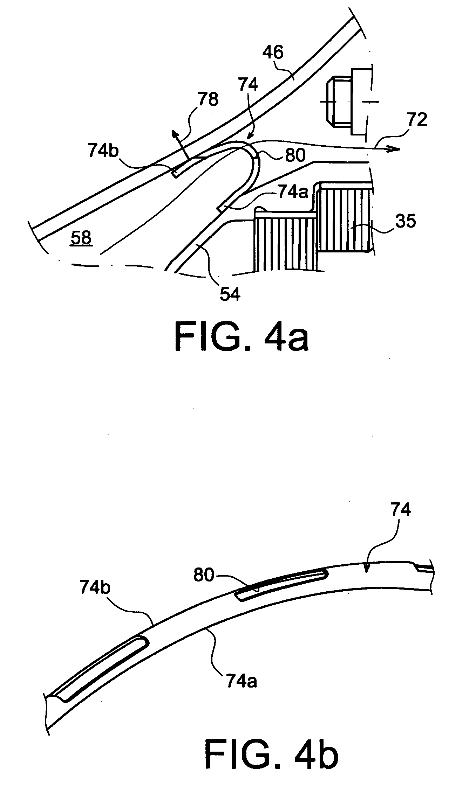

En alternative, comme cela est représenté sur les figures 4a et 4b relatives à un troisième mode de réalisation préféré de l'invention, les orifices traversants 80 peuvent être de section oblongue, toujours en étant espacés circonférentiellement les uns des autres.

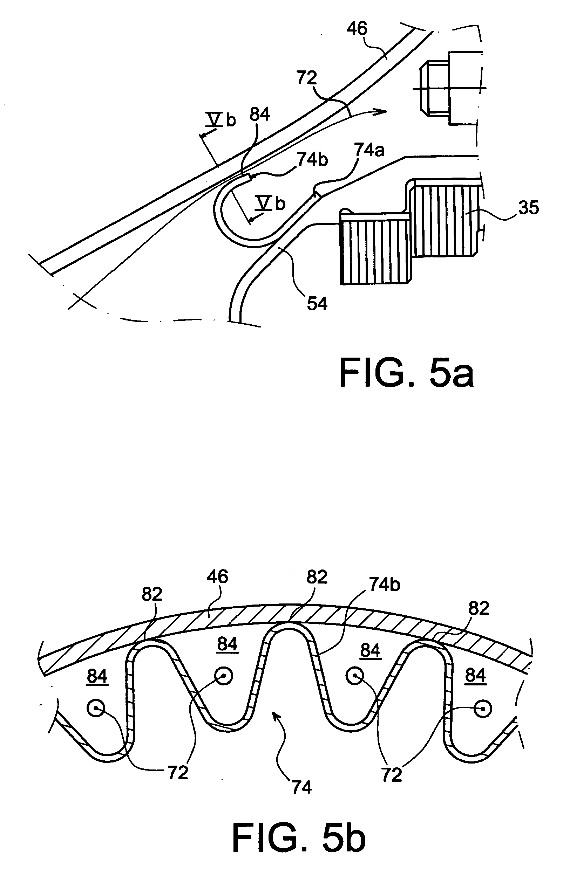

Enfin, sur les figures 5a et 5b montrant un quatrième mode de réalisation préféré, on peut apercevoir une solution alternative pour le passage de l'air frais de l'un à l'autre des deux compartiments de la cavité 58. Elle réside dans le fait de conformer la seconde extrémité 74b maintenue en appui contre la paroi 46 de manière à présenter en alternance, selon une direction circonférentielle, des lobes 82 en appui contre cette paroi 46, et des creux 84, ces derniers permettant ainsi le passage de l'air.

Bien entendu, diverses modifications peuvent être apportées par l'homme du métier à l'invention qui vient d'être décrite, uniquement à titre d'exemples non limitatifs.

## Revendications

1. Stator (5) de turbine pour turbomachine d'aéronef, comprenant :
- une paroi de stator (46) portant fixement vers l'aval un injecteur d'air haute pression (50) ;
- un support annulaire d'élément abradable (54) destiné à être contacté par un labyrinthe d'étanchéité, ledit support agencé en aval de ladite paroi de stator étant raccordé fixement à son extrémité radiale inférieure (54a) audit injecteur d'air haute pression et à son extrémité radiale supérieure (54b) à ladite paroi de stator, de manière à ce que ledit support annulaire, ladite paroi de stator et ledit injecteur d'air haute pression délimitent conjointement une cavité sous pression (58),
**caractérisé en ce qu'**il comporte de plus au moins un dispositif d'amortissement de vibrations (74) placé dans ladite cavité sous pression (58), ledit dispositif d'amortissement de vibrations étant en contact avec chacun des deux éléments pris parmi ladite paroi de stator (46) et ledit support annulaire d'élément abradable (54).

2. Stator selon la revendication 1, **caractérisé en ce que** ledit dispositif d'amortissement de vibrations prend la forme d'une tôle (74) placée dans ladite cavité sous pression (58) et présentant une première extrémité (74a) montée fixement sur l'un des deux éléments pris parmi ladite paroi de stator et ledit support annulaire d'élément abradable, ainsi qu'une seconde extrémité libre (74b), maintenue en appui contre l'autre desdits deux éléments.

3. Stator selon la revendication 2, **caractérisé en ce que** ladite tôle (74) est une tôle annulaire d'amortissement de vibrations, centrée sur un axe longitudinal (6) du stator et placée dans ladite cavité sous pression (58), lesdites première et seconde extrémités (74a, 74b) correspondant à des extrémités annulaires de ladite tôle.

4. Stator selon la revendication 3, **caractérisé en ce que** ladite tôle est percée de manière à permettre une circulation d'air à travers celle-ci.

5. Stator selon la revendication 3 ou la revendication 4, **caractérisé en ce que** ladite seconde extrémité (74b) maintenue en appui contre ledit autre des deux éléments est conformée de manière à présenter en alternance, selon une direction circonférentielle, des lobes (82) en appui contre ledit autre des deux éléments, et des creux (84).

6. Stator selon l'une quelconque des revendications 3 à 5, **caractérisé en ce qu'**en demi-section transversale, ladite tôle est de forme courbe.

7. Stator selon la revendication 6, **caractérisé en ce qu'**en demi-section transversale, ladite tôle présente une forme générale en U ou en C.

8. Stator selon l'une quelconque des revendications 3 à 7, **caractérisé en ce qu'**il est conçu de sorte qu'en demi-section transversale, un effort de contact (78) entre la seconde extrémité (74b) et ledit autre des deux éléments est localement sensiblement orthogonal à une surface de ladite tôle.

9. Turbine pour turbomachine d'aéronef comprenant un stator selon l'une quelconque des revendications précédentes.

10. Turbomachine d'aéronef comprenant une turbine selon la revendication 9.

## Claims

1. Turbine stator (5) for an aircraft turbine engine, comprising:
- a stator wall (46) supporting a high pressure air injector (50) fixed on the downstream side;
- an annular abradable element support (54) designed to be contacted by a sealing labyrinth, the lower radial end (54a) of said support arranged on the downstream side of said stator wall being fixed to said high pressure air injector and its upper radial end (54b) being fixed to said stator wall, such that said annular support, said stator wall and said high pressure air injector jointly delimit a cavity (58) under pressure,
**characterised in that** it also comprises at least one vibration damping device (74) located in said cavity (58) under pressure, said vibration damping device being in contact with each of the two elements taken among said stator wall (46) and said abradable annular element support (54).

2. Stator according to claim 1, **characterised in that** said vibration damping device is in the form of a plate (74) located in said cavity (58) under pressure and with a first end (74a) fixed onto one of the two elements among said stator wall and said annular abradable element support, and a second free end (74b), held in contact with the other of said two elements.

3. Stator according to claim 2, **characterised in that** said plate (74) is an annular vibration damping plate centred on a longitudinal axis (6) of the stator and located in said cavity (58) under pressure, said first and second ends to (74a, 74b) corresponding to annular ends of said plate.

4. Stator according to claim 3, **characterised in that** said plate is perforated to allow air circulation through it.

5. Stator according to claim 3 or claim 4, **characterised in that** said second end (74b) held in contact with said other of the two elements is shaped so has to have lobes (82) bearing on said other of the two elements, and indentations (84), along a circumferential direction.

6. Stator according to any one of claims 3 to 5, **characterised in that** said plate has a curved half cross-section.

7. Stator according to claim 6, **characterised in that** the general shape of the half cross-section of said plate is a U or C shape.

8. Stator according to any one of claims 3 to 7, **characterised in that** it is designed such that in a half cross-section, a contact force (78) between the second end (74b) and said other of the two elements is locally approximately orthogonal to a surface of said plate.

9. Turbine for an aircraft turbine engine comprising a stator according to any one of the precious claims.

10. Aircraft turbine engine comprising a turbine according to claim 9.

## Patentansprüche

1. Turbinenstator (5) für das Turbinentriebwerk eines Luftfahrzeugs umfassend:
- eine Statorwand (46), die einen auf der stromabwärts gelegenen Seite ortsfest angebrachten Hochdruckluftinjektor (50) trägt;
- einen ringförmigen Träger (54) für ein abtragbares Element, der dazu bestimmt ist, von einem Dichtlabyrinth kontaktiert zu werden, wobei das untere runde Ende (54a) des auf der stromabwärts gelegenen Seite der Statorwand angeordnete Träger ortsfest an dem Hochdruckluftinjektor angebracht ist und sein oberes rundes Ende (54b) fest an der Statorwand angebracht ist, so dass der ringförmige Träger, die Statorwand und der Hochdruckluftinjektor zusammen einen unter Druck stehenden Hohlraum (58) begrenzen,
**dadurch gekennzeichnet, dass** er außerdem wenigstens eine sich in dem unter Druck stehenden Hohlraum (58) befindliche Vibrationsdämpfungsvorrichtung (74) umfasst, wobei die Vibrationsdämpfungsvorrichtung mit jedem der beiden Elemente aus der Statorwand (46) und dem ringförmigen Träger (54) für ein abtragbares Element in Kontakt steht.

2. Stator gemäß Anspruch 1, **dadurch gekennzeichnet, dass** die Vibrationsdämpfungsvorrichtung die Form einer Platte (74) aufweist, die sich in dem unter Druck stehenden Hohlraum (58) befindet und ein erstes Ende (74a), das auf einem der beiden Elemente aus der Statorwand und dem ringförmigen Träger für ein abtragbares Element ortsfest angebracht ist, sowie ein zweites, freies Ende (74b) aufweist, das sich auf dem anderen der beiden Elemente abstützt.

3. Stator gemäß Anspruch 2, **dadurch gekennzeichnet, dass** die Platte (74) eine ringförmige Vibrationsdämpfungsplatte ist, die auf einer Statorlängsachse (6) zentriert ist und sich in dem unter Druck stehenden Hohlraum (58) befindet, wobei das erste und zweite Ende (74a, 74b) den ringförmigen Enden der Platte entsprechen.

4. Stator gemäß Anspruch 3, **dadurch gekennzeichnet, dass** die Platte so durchlöchert ist, dass Luft durch sie zu strömen vermag.

5. Stator gemäß Anspruch 3 oder Anspruch 4, **dadurch gekennzeichnet, dass** das sich auf das andere der beiden Elemente abstützende zweite Ende (74b) so geformt ist, dass es in Umfangsrichtung abwechselnd sich auf das andere der beiden Elemente abstützende Erhebungen (82) und Vertiefungen (84) aufweiset.

6. Stator gemäß einem der Ansprüche 3 bis 5, **dadurch gekennzeichnet, dass** die Platte im Halbquerschnitt kurvenförmig ist.

7. Stator gemäß Anspruch 6, **dadurch gekennzeichnet, dass** die allgemeine Form des Halbquerschnitts der Platte U- oder C-förmig ist.

8. Stator gemäß einem der Ansprüche 3 bis 7, **dadurch gekennzeichnet, dass** er so ausgelegt ist, dass die Berührungskraft (78) im Halbquerschnitt zwischen dem zweiten Ende (74b) und dem anderen der beiden Elemente örtlich im Wesentlichen orthogonal zur Plattenoberfläche ist.

9. Turbine für ein Turbinentriebwerk eines Luftfahrzeugs umfassend einen Stator gemäß einem der vorangehenden Ansprüche.

10. Turbinentriebwerk eines Luftfahrzeugs umfassend eine Turbine gemäß Anspruch 9.
